Europäisches Patentamt

(19) European Patent Office

Office européen des brevets

(11) Publication number: **0 137 481**
A2

## (12) EUROPEAN PATENT APPLICATION

(21) Application number: **84112053.8**

(22) Date of filing: **09.10.84**

(51) Int. Cl.⁴: **G 06 F 15/64**

(30) Priority: **11.10.83 JP 188396/83**

(43) Date of publication of application:
**17.04.85 Bulletin 85/16**

(84) Designated Contracting States:
**DE FR GB**

(71) Applicant: HITACHI, LTD.
6, Kanda Surugadai 4-chome Chiyoda-ku
Tokyo 100(JP)

(72) Inventor: Ariga, Makoto
103, Maison Tateba 4035 Izumicho
Totsuka-ku Yokohama(JP)

(72) Inventor: Maeda, Shunji
143-go, Hachimanyama Apartment House 1545
Yoshidacho Totsuka-ku Yokohama(JP)

(72) Inventor: Hata, Seiji
20-10, Jonan-1-chome
Fujisawa-shi(JP)

(74) Representative: Altenburg, Udo, Dipl.-Phys. et al,
Patent- und Rechtsanwälte
Bardehle-Pagenberg-Dost-Altenburg & Partner Postfach
86 06 20
D-8000 München 86(DE)

(54) Image processing system.

(57) An area designating memory (22) for storing a bit pattern representing a picture designating area used for image processing, and a video memory (11) for storing an image to be image-processed in a form of digital picture element data are provided in an image processing system. In synchronism with picture element address signals (13, 14) sequentially generated by an address generating circuit (16), corresponding picture element data is read from the video memory, and also, corresponding area designating bits are sequentially read from the area designating memory. The read picture element data and associated area designating bit are applied to a logic-arithmetic circuit (36), and the read picture element data is selectively gated depending on the status of the area designating bit. The video memory (11) and area designating memory (22) may be read/written by an external processor (100). By manipulating a video signal switching circuit (7), the digitized video signal is directly gated depending on the status of the area designating bit read from the area designating memory (22), and thus the processed image signal can also be obtained without the video memory.

EP 0 137 481 A2

./...

F I G . 1

Hitachi, Ltd.  - 1 -  09 0137481
A 5810-EP

## IMAGE PROCESSING SYSTEM

The present invention relates to an image processing system, and in particular to an image processing system which is capable of processing at high speeds a desired area of image used for pattern recognition.

In conventional area designating circuits for image processing, it is determined whether or not a picture element address for an image inputted is within a designated area, and if it is outside the designated area, the content in the address is rewritten (e.g., rewritten to "0") by means of software each time the image is inputted thereby to effect masking of the area other than the designated area of the image. In such a method, problems are involved in that the volume of software is enlarged, and much longer processing time is required since masking processing must be carried out each time a different image is inputted even if the designated area is the same.

Furthermore, a method of image processing of a designated area by means of hardware has been known. In this case, however, it is difficult to achieve the area designation of a complicated shape, and the area designation is only applicable to a square area having a diagonal defined by two coordinate positions, that is, by designating a starting point $(X_1, Y_1)$ coordinate and a terminal point $(X_2, Y_2)$ coordinate.

It is an object o of the present invention to provide an image processing system which is capable of image processing of a desired designated area at high speeds and with simple construction.

Another object of the present invention is to provide an image processing system in which the designated area can easily be changed externally independent on the image to be image processed.

The present invention is featured in that a field memory for area designation used in image processing is provided in an image processing system.

According to one aspect of the present invention, an image processing system having two image memories is provided in which the two image memories are in entirely the same synchronized relationships with a driving signal of a sensor such as a TV camera or the like which generates a video signal of an image to be image processed, and one of the two memories is used for the video and the other image memory is used for area designation for image processing. These two image memories may have a circuit arrangement which allows to read and write from an external processor independently from each other. The read and write from the external processor may be asynchronous with a driving signal of a sensor or the like.

According to another aspect of the present invention, an image processing system is provided in which an image memory for area designation contains memory planes for a plurality of pictures and these memory planes are arranged to be used by selecting or combining so that the processing time can be reduced and various area designations can be achieved.

These and other objects, features and advantages of the invention will be apparent from the following description when taken in conjunction with the accompanying drawings in which:

Fig. 1 is a schematic block diagram of one embodiment of an image processing system according to the present invention;

Fig. 2 is an electrical circuit diagram illustrating a concrete arrangement of the logic·arithmetic circuit 36 in the embodiment in Fig. 1;

Fig. 3 is a diagram useful to schematically explaining the image processing according to the embodiment shown in Fig. 1; and

Fig. 4 is a schematic diagram of an important portion illustrating another embodiment of the present invention.

Embodiments of the present invention will be described hereinafter referring to the drawings.

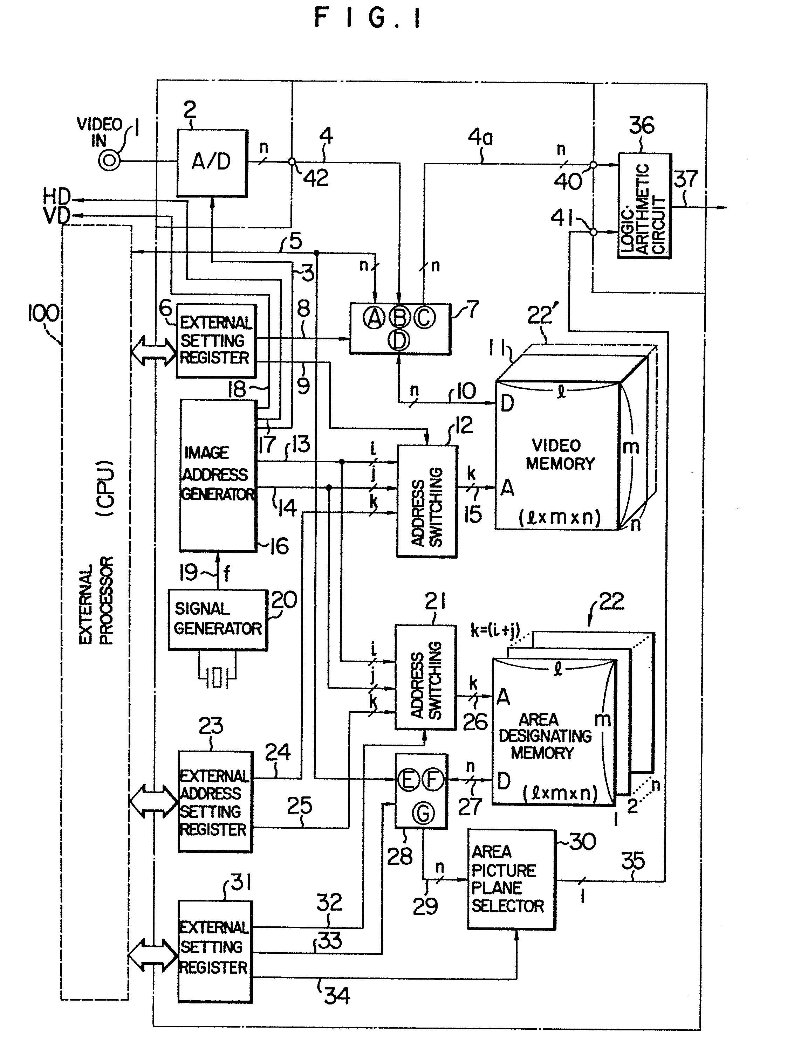

An embodiment in Fig. 1 is constituted by circuitry which operates, with the exception of access to image memories in accordance with an instruction from an external processor (CPU in Fig. 1) 100, in synchronism with various signals produced based on a clock signal generated by a signal generating circuit 20 and having a fundamental frequency ($f$ Hz, e.g., 18 MHz).

First, a fundamental clock 19 outputted from the signal generating circuit 20 renders an image address generating circuit 16 generate a horizontal sync (synchronizing) signal 17 and a vertical sync signal 18 for a TV camera (not shown) which supplies to a video terminal 1 a video signal of an image to be image processed. In other words, the TV camera is synchronized by the circuitry shown in Fig. 1. At the same time, the image address generating circuit 16 generates a horizontal picture element address signal 13 ($i$ bits, e.g., 8 bits) and a vertical picture element address signal 14 ($j$ bits, e.g., 8 bits) corresponding to the picture scanning of the TV camera. By these address signals, a memory having ($l$ x m) picture elements per one picture, where $l$ is horizontal picture element divisions (e.g., 256) and $m$ is vertical picture element divisions (e.g., 256), can be accessed. In the embodiment of Fig. 1, two image memories are provided and one is a video memory 11 and the other is an area designating memory 22.

In operation of the circuitry, a video signal 1 from the TV camera (not shown) driven by the sync signals 17 and 18 is inputted to an A/D converting circuit 2. In the A/D converting circuit 2, in response to a sampling pulse 3 which is synchronized with updating of a picture element address during horizntal scanning of the image address generating circuit 16, and specifically which is synchronized with transition timing of the least significant bit of the horizontal picture element address, the analog video signal 1 is converted into a digital signal of $n$ bits

- 5 -

0137481

(e.g., 8 bits) and obtains a digital video signal 4 having tone levels of $2^n$ steps. In this respect, the digital video signal 4 is in synchronizm with the address signals of the image address generating circuit 16.

Then, the digital video signal 4 is switched with respect to its paths by a video signal switching circuit 7 so that the digital video signal 4 passed through a predetermined path. Signal paths in the video signal switching circuit 7 can be controlled by the external processor 100 by setting data in an external setting register 6 by the external processor 100. The signal paths include the following paths, and these paths as expressed by reference characters of terminals Ⓐ, Ⓑ, Ⓒ and Ⓓ in Fig. 1 are respectively realized depending on set conditions:

1. Ⓐ → Ⓓ : write data in the video memory 11 from the external processor 100.

2. Ⓓ → Ⓐ : read data of the video memory 11 to the external processor 100.

3. Ⓑ → Ⓓ : write the digital video signal 4 in the video memory 11.

4. Ⓑ → Ⓒ : output the digital video signal 4 as it is to the next stage as a signal 37.

5. Ⓓ → Ⓒ : output from the video memory 11 as the signal 37 to the next stage.

Supposing that the video signal switching circuit 7 has been switched to establish the signal path Ⓑ → Ⓓ. In this case, a video memory address switching circuit 12 is switched by a control signal 9 from the external setting register 6 so that the address signals 13 and 14 from the image address generating circuit 16 are supplied to the video memory 11. As a result, the digital video signal 4 is sequentially written in a corresponding picture element address within the video memory 11.

When the external processor (CPU) 100 accesses picture element data in the video memory 11, the video signal switching circuit 7 is switched by the control signal 9 from the external setting register 6 so that the signal path is established (A) → (D) (in case of writing) or (D) → (A) (in case of reading). Further, the video memory address switching circuit 12 is switched so that a k-bit (e.g., 16 bits) address signal 24 which has been set in the external address setting register 23 is supplied to the video memory 11 as a picture element address signal 15. In this manner, the external processor 100 can arbitrarily access the picture element data in the video memory 11, and can also change the content thereof. When the external processor 100 accesses the picture element data in the video memory 11, it is not required to be synchronized with the signal from the video address generating circuit 16.

Next, description will be made as to the operation of an area designating memory 22. As writing and reading modes of the area designating memory 22, two types of modes are included, that is, reading and writing of data from the external processor 100, and reading by the picture address signals 13 and 14 which are synchronized with the sync signals of the TV camera.  In other words, the writing of data in the area designating memory 22 is carried out only by the external processor 100.

Area designation by the external processor 100 to the area designating memory 22 for the purpose of image processing is achieved by a k-bit (e.g., 16 bits) external address signal 25 from the external address setting register 23 and writing data 5 from the external processor 100.  In this respect, since the external data 5 is supplied through a bidirectional data bus, the external processor 100 can freely read the data of the area designating memory 22 through this data bus.

In a similar manner to the access to the video memory 11 an area designating address switching circuit 21 is switched by a signal 32 from an external setting register 31 so that an external address signal 25 and the picture element address signals 13, 14 are supplied to the area designating memory 22.  At the same time, switching of signal paths of area designating data is effected by a switching control signal 33 from the external setting register 31. The paths in the signal switching circuit 28 include the following paths as expressed by the reference characters of temrinals Ⓔ, Ⓕ and Ⓖ in Fig. 1:

1. Ⓔ → Ⓕ: write data in the area designating memory 22 from the external processor 100.

2. Ⓕ → Ⓔ: read data to the external processor 100 from the area designating memory 22.

3. Ⓕ → Ⓖ: read data which is synchronized with picture element address.

In such a manner, reading and writing of data of the area designating memory 22 is performed by the external processor 100.

The area designating memory 22 has, similar to the video memory 11, memory capacity of $(l \times m)$ picture elements per one picture formed by horizontal picture element divisions $\underline{l}$ (e.g., 256) and vertical picture element devisions $\underline{m}$ (e.g., 256). However, in the case of the area designating memory 22, it is possible to designate with 1-bit data whether within a designated area or not. In the embodiment, it is decided that within the designated area is represented by a logic "1" and other than that is represented by a logic "0". Further, in the embodiment, the area designating memory 22 has $\underline{n}$ area designating picture planes (e.g., 8 picture planes) each of the area designating picture planes is constituted by $(l \times m \times 1)$ bits, and has the same memory capacity as the video memory 11. In other words, data access to the area designating memory 22 is effected in units of parallel n-bits. This means that $\underline{n}$ area designating data corresponding to the same picture element address is simultaneously read/written. However, it is not necessarily required that the memory capacity of the area designating memory 22 coincides with that of the video memory 11, and a memory for at least one picture will suffice. Further, depending on a situation, the numbers of the horizontal and vertical picture element divisions

($\underline{\ell}$ and $\underline{m}$) of the area designating memory 22 may differ from that of the horizontal and vertical picture element divisions ($\underline{\ell}$ and $\underline{m}$) of the video memory 11.  For example, with respect to the numbers of the horizontal and vertical picture element divisions ($\underline{\ell}$ and $\underline{m}$) of the video memory 11, the numbers of the area designating memory 22 may be respectively selected as $\ell/2$ and $m/2$.  In this case, a part of bits of the picture element address signal 26 supplied to the area designating memory 22 are not used.

Next, description will be made as to the operation for generating a digital video signal which is image processed by using the video memory 11 and the area designating memory 22.  In this instance, the signal paths of the video signal switching circuit 7 are switched by the control signal 8 from the external setting register 6 so that the signal path $\textcircled{D} \rightarrow \textcircled{C}$ is established, and the video memory address switching circuit 12 is also switched so that the address signal 15 of $(i + j) = k$ bits from the image address generating circuit 16 is supplied to the video memory 11.  Further, the video memory 11 is set to a read mode.  On one hand, the signal path of the area designating signal switching circuit 28 is, under the control of a control signal from the external setting register 31, switched to the signal path of $\textcircled{F} \rightarrow \textcircled{G}$, and also the area designating memory address switching circuit 21 is switched so that the address signal 26 of $\underline{k}$ bits from the image address generating circuit 16 is supplied to the area designating memory 22.  The area designating memory 22 is set to a read mode. In synchronism with the picture element address signals 13 and 14 from the image address generating circuit 16, digital picture element data 10 of $n$ bits corresponding to the proper address is read from the video memory 11, and simultaneously area designating data 27 for $n$ pictures (i.e., $n$ bits) corresponding to the proper address is read from the area designating memory 22. The digital picture element data 10 read in this manner is inputted through the video signal switching circuit 7 to the logic·arithmetic circuit 36 which will be described hereinafter. On one hand, the read area designating data 27 of $n$ bits is inputted through the area designating signal switching circuit 28 to an area picture selecting circuit 30. The area picture selecting circuit 30 is constituted by a digital multiplexer circuit, and, in accordance with the instruction of a control signal from the external setting register 31, selects 1 bit out of $n$ bits. If necessary, a latch circuit may be incorporated into the circuit 30. In other words, the area picture selecting circuit 30 selects, when instructed by the external setting register 31, data of one desired picture out of $n$ pictures, and supplies to the logic· arithmetic circuit 36 as the control signal 35. In this respect, the selecting circuit 30 is not limited to the digital multiplexer, but various variants may be considered. For example, in the selecting circuit 30, desired 2 bits (i.e., 2 pictures) are selected out of the inputted $n$ bits, and the result of an OR logic of the selected 2-bit data may be supplied to the logic·arithmetic circuit 36 as the control signal 35. In this case the selecting circuit 30 eventually sends to the circuit 36 the control signal 35 which represents a designating area produced as a result of superposing the designating areas of the selected 2 pictures one on the other.

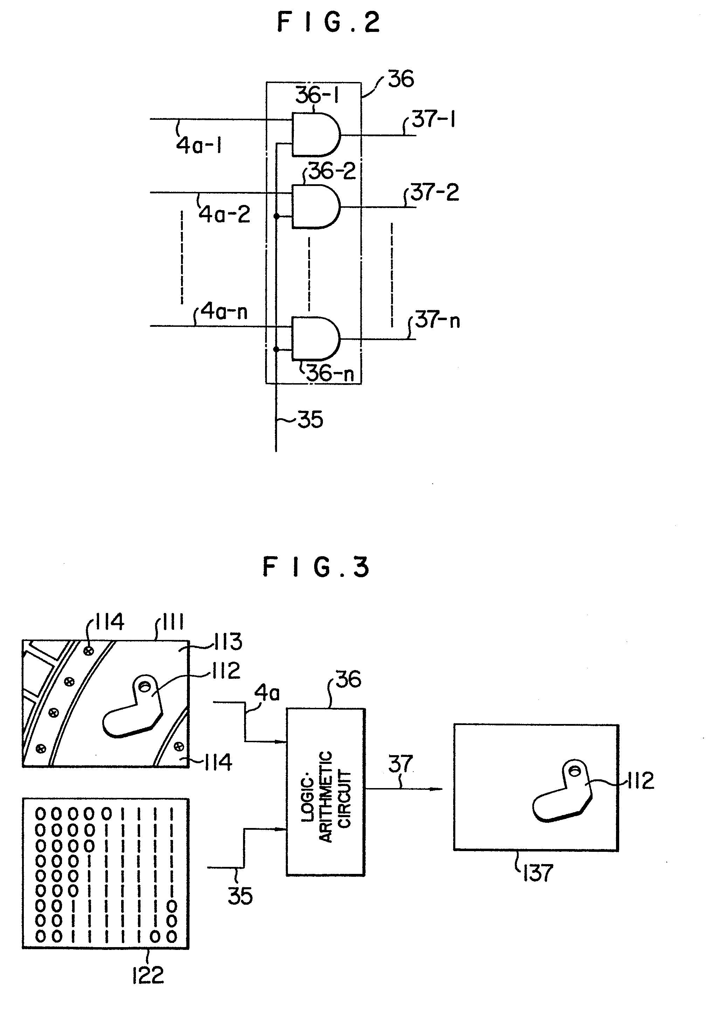

Fig. 2 illustrates a concrete arrangement of the logic·arithmetic circuit 36. In this circuit arrangement, $n$ digital video lines 4a-1 to 4a-n are respectively connected to one input terminals of respective $n$ AND gates 36-1 to 36-n, and the other input terminals of the $n$ AND gates are connected in common to the control signal 35 from the area picture selecting circuit 30. By this arrangement, if area designating data selected in the area picture selecting circuit 30 out of the n-bit area designating data which has been read in response to the picture element address signals 13 and 14 outputted from the image address generating circuit 16 is a logic "1" indicating a designating area, then the logic·arithmetic circuit 36 opens all the AND gates and allows to pass an n-bit digital video signal 4a read in response to the same picture element address signals 13 and 14 as the n-bit image processing signal 37. However, if the area designating data selected in the selecting circuit 30 is a logic "0", then the circuit 36 closes all the AND gates, and thus all the bits of the image processing signal 37 becomes a logic "0" irrespective of the status of the read digital video signal 4a. When the image address generating circuit 16 continues reading while sequentially updating the address, the image processing signal 37 retains image only within the designated area, and thus produces processed image in which the area other than the designated area is masked with a logic "0". Further, in Fig. 2, although the logic.arithmetic curcuit 36 is constituted by the AND gates and performs the logic function, other types of gates such as NAND gate, OR gate, etc., may be used solely or in combination thereby to perform arbitrary logic function. In addition, for example, in the image processing signal 37, each picture element data other than the designated area may be masked with n-bit data having a fixed value instead of all logic "0" or all logic "1". Further, the logic·arithmetic circuit 36 may have an arithmetic function to subtract a predetermined value from each picture element signal within the designated area.

Fig. 3 illustrates schematically the operation of the logic·arithmetic circuit 36 in Fig. 1. In Fig. 3, the numeral 111 indicates an example of an image picked up by a TV camera (not shown) and stored in the video memory 11, and numeral 112 indicates a part being transferred on a belt conveyor 113 and a position of the part is intended to be determined by pattern recognition. The numeral 114 indicates a surrounding member of the belt conveyor 113, and the surrounding member 114 is unnecessary for the recognition and rather, the presence of the member produces noise in the recognition of the part 112 and tends to cause an error in the recognition. The numeral 122 indicates a bit pattern formed by area designating bits stored in the area designating memory 22, and a designated area required to recognize the part 112 is represented by a logic "1" and an area other than the designated area unnecessary for the recognition is represented by a logic "0". These image information signals are applied to the logic·arithmetic circuit 36 in synchronism with the picture element address signal from the image address generating circuit 16, and the logic arithmetic circuit 36 produces a processed image 137 by logic processing the image information signals. In the processed image 137, only an image of the part 112 to be recognized remains and thus a desired image is obtained. Further, in this instance, the logic·arithmetic circuit 36 may perform additional arithmetic processing on the digital picture element data such that digital picture element data for a portion of the belt conveyor 113 is made all logic "0" and coincides with that other than the designated area. As described above, since various image processings can be achieved depending on the arrangement of the logic· arithmetic circuit 36, as shown in Fig. 1, signal output terminals 40 and 41 may be provided so that a differential modified logic·arithmetic circuit 36 may be connected to these terminals 40 and 41 depending òn desired processing purpose. Further, there the image processing system of Fig. 1 receives a video signal which has already been digitized, the A/D converting circuit 2 is not necessary, and the video signal may be directly inputted from an input terminal 42.

In the embodiment of Fig. 1, without storing the digital video signal in the video memory 11, the image can also be image processed directly with respect to the designated area thereby to obtain the image processed signal 37. In order to achieve this operation, in the operation of generating the image processed digital video signal described in the foregoing, the switching of the signal paths in the video signal switching circuit 7 is only required to establish the path (B) → (C) while maintaining the other setting condition the same. As a result of this measure, the digital video signal supplied from the A/D converting circuit 2 is directly inputted to the logic· arithmetic circuit 36, and in this circuit, it is image processed with respect to the designated area stored in the area designating memory 22 and the image processed signal 37 is obtained. In this case, the video memory 11 becomes unnecessary. Supposing that the designated area has been predetermined, the area designating memory 22 can be formed with a read-only memory (ROM), and thus the external processor 100 is not required to access both the memories 11 and 22. For this reason, where the image processing system according to this invention is exclusively applied to a type in which the analog video signal from the TV camera is directly image processed with respect to the designated area stored in the ROM, the circuit arrangement will be simplified to a great extent.

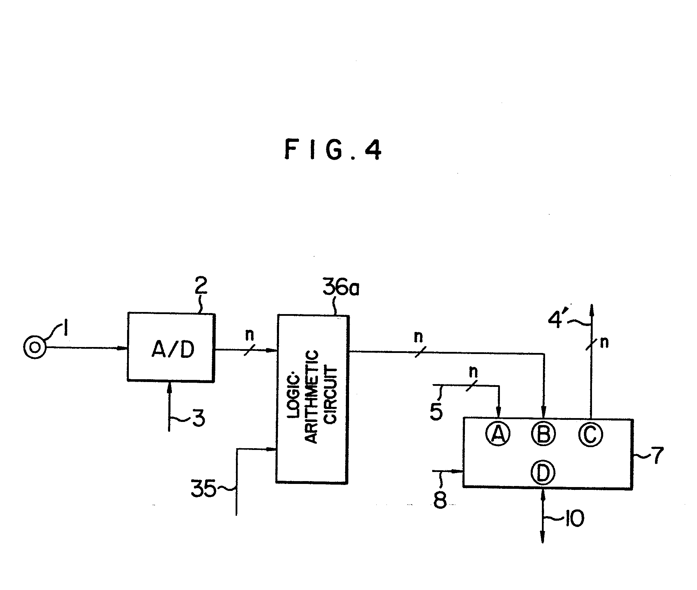

As shown in Fig. 4, the logic·arithmetic circuit 36 may be connected between the A/D converting circuit 2 and the signal switching circuit 7 as a logic·arithmetic circuit 36a. The same effect can be obtained. In this case, the digital video signal 4 from the A/D converting circuit 2 is written in the video memory 11 after being image processed by the logic arithmetic circuit 36a. To achieve this operation, the video memory 11 must be operated in a write mode, and the area designating memory 22 must be operated in a read mode. However, as described in the foregoing, the area designating memory 22 may only be in the write mode only when the area designating data is written by the external processor 100, and no problem will be caused even when the area designating memory 22 is being set in the read mode when the digital video signal is to be written in synchronism with the picture element address signal from the image address generating circuit 16.

Furthermore, in the embodiment of Fig. 1, although the video memory 11 and the area designating memory 22 are illustrated separately, an area designating memory 22' may be provided as a part of the video memory 11 as shown by a broken line in Fig. 1, and the area designating memory 22 may be omitted. In this instance, a part of the parallel bits $n$ of the video memory 11 is used as designating area bits. For example, in the video memory 11, such an arrangement may be employed in which $n$ is made 9, picture element data is 8 bits, and the designating area bit is 1 bit.

In the circuit arrangement described above, by reading the video memory 11 and the area designating memory 22 in synchronism with the picture element address, the masking processing can be achieved in accordance with an arbitrarily set content of the area designating memory 22.

0137481

According to the present invention, masking on the image processing area can be achieved on the real time basis, and reduction of a recognition time in the pattern recognition can also be attained. Further, various types of area patterns can be set, and thus efficiency in software for the recognition is also improved.

0137481

## C L A I M S

1.     An image processing system comprising:

a signal input section (42) for accepting a digitized video signal (4) to be image processed, said video signal being constituted by a plurality of digital picture element data;

an area designating memory (22) for storing digital data to designate a picture area for image processing with respect to an image represented by said video signal;

address generating means (16, 20, 21) for providing to said area designating memory a picture element address corresponding to each digital picture element data in synchronism with the each digital picture element data in said digitized video signal, and for reading area designating digital data corresponding to the picture element data; and

a signal output section (40, 41) including a control signal line for transferring the area designating digital data read from said area designating memory as a control signal (35) for image processing and including an output signal line for transferring said digitized video signal (4a).

2.     An image processing system according to claim 1, further comprising:

a video memory (11) capable of writing and reading, in synchronism with a picture element address from said address generating means, digital picture element data corresponding to the picture element address of said digitized video signal; and

a first signal switching circuit (7) connected to said signal input section, said output signal line and said video memory for switching signal paths connected therebetween.

3. An image processing system according to claim 2, further comprising:

an external address setting register for holding data for providing a picture element address externally to said video memory and said area designating memory;

a data bus for writing and reading data externally from said video memory and said area designating memory;

a first address switching means (12) for switching between picture element address from said address generating means and picture element address from said address setting register and for providing to said video memory the switched picture element address;

a second address switching means (21) for switching between picture element address from said address generating means and picture element address from said address setting register and for providing to said area designating memory the switched picture element address;

a second signal switching circuit (28) connected to said area designating memory, said control line and said data bus for switching signal paths connected therebetween; and

external setting register means connected to said first and second address switching means and said first and second signal switching circuits for holding data to control externally the operations thereof;

wherein said first signal switching circuit is also connected to said data bus, and switching of signal paths between said data bus, said video memory and said signal input section is also enabled.

4.     An image processing system according to claim 1, further comprising:

logic·arithmetic means (36) connected to said signal output section for generating an image processed signal (37) by processing said digitized video signal in response to said control signal.

5.     An image processing system according to claim 4, wherein said logic·arithmetic means includes a plurality of AND gates.

6.     An image processing system according to claim 1, further comprising:

an A/D converting circuit (2) connected to said signal input section for converting an analog video signal into said digitized video signal.

7.     An image processing system according to claim 2, wherein said video memory (11) and said area designating memory (22) are formed integrally as a unit, and read/write data to said both memories consists of digital picture element data and area designating digital data.

8.     An image processing system according to claim 1, further comprising:

logic·arithmetic means (36a) connected between said input section and said video memory for processing said digitized signal in response to said control signal.

9.      An image processing system according to claim 8, wherein said logic·arithmetic means (36a) includes a plurality of AND gates.

10.      An image processing system according to claim 1, wherein the area designating digital data of said area designating memory (22) is formed by a plurality of area designating bits capable of area designation of a plurality of pictures.

11.      An image processing system according to claim 10, further comprising:

        an area picture selecting circuit (30) connected to said control signal line and said area designating memory for producing a control signal by selecting area designating bits representing one desired picture out of a plurality of area designating pictures.

12.      An image processing system according to claim 10, further comprising:

        an area picture selecting circuit (30) connected to said control signal line and said area designating memory for selecting area designating bits representing at least two pictures out of a plurality of area designating pictures and for producing a control signal by logic processing the selected bits.

0137481

F I G . 2

F I G . 3

FIG.4